(19) Europäisches Patentamt
European Patent Office
Office européen des brevets

(11) EP 1 637 545 B1

(12) **EUROPEAN PATENT SPECIFICATION**

(45) Date of publication and mention of the grant of the patent:
**11.11.2009 Bulletin 2009/46**

(21) Application number: **04735677.9**

(22) Date of filing: **01.06.2004**

(51) Int Cl.:
*C08F 8/42* (2006.01) *C08F 20/36* (2006.01)
*C09K 11/06* (2006.01) *H05B 33/14* (2006.01)

(86) International application number:
**PCT/JP2004/007904**

(87) International publication number:
**WO 2004/106389 (09.12.2004 Gazette 2004/50)**

(54) **LUMINESCENT ORGAINC-POLYMER/METAL COMPLEX, LUMINESCENT ORGANIC-POLYMER/METAL COMPLEX COMPOSITION CAPABLE OF FORMING FILM BY WET PROCESS, AND PROCESS FOR PRODUCING THE SAME**

LUMINESZENTER KOMPLEX AUS ORGANISCHEM POLYMER UND METALL, EINEN LUMINESZENTEN KOMPLEX AUS ORGANISCHEM POLYMER UND METALL ENTHALTENDE ZUSAMMENSETZUNG, DIE ZUR FILMBILDUNG NACH NASSVERFAHREN BEFÄHIGT IST, UND HERSTELLUNGSVERFAHREN DAFÜR

COMPLEXE POLYMERE ORGANIQUE/METAL LUMINESCENT, COMPOSITION DE COMPLEXE POLYMERE ORGANIQUE/METAL LUMINESCENT CAPABLE DE FORMER UNE COUCHE MINCE PAR TRAITEMENT HUMIDE ET SON PROCEDE DE PRODUCTION

(84) Designated Contracting States:
**DE GB**

(30) Priority: **02.06.2003 JP 2003156790**
**03.09.2003 JP 2003311117**

(43) Date of publication of application:
**22.03.2006 Bulletin 2006/12**

(73) Proprietors:
- **Nippon Light Metal Company Ltd.**
  **Shinagawa-ku,**
  **Tokyo 140-8628 (JP)**
- **Kudo, Kazuaki**
  **Tokyo 1538505 (JP)**

(72) Inventors:
- **KUDO, Kazuaki,**
  **University of Tokyo**
  **Meguro-ku,**
  **Tokyo 1538505 (JP)**
- **KOBAYASHI, Yasushi,**
  **Nippon Light Metal Company Ltd**
  **Tokyo 1408628 (JP)**
- **TAKAYAMA, Toshio,**
  **University of Tokyo**
  **Meguro-ku, Tokyo 1538505 (JP)**
- **SANO, Hiroshi,**
  **Nippon Light Metal Company, Ltd**
  **Tokyo 1408628 (JP)**

(74) Representative: **Matthews, Derek Peter**
**Frank B. Dehn & Co.**
**St Bride's House**
**10 Salisbury Square**
**London**
**EC4Y 8JD (GB)**

(56) References cited:
**WO-A-02/068560** **WO-A2-2004/073030**
**JP-A- 6 032 824** **JP-A- 8 060 382**
**JP-A- 11 317 291**

- **TOSHIO TAKAYAMA, MASATOSHI KITAMURA, YASUSHI KOBAYASHI, YASUHIKO ARAKAWA, KAZUAKI KUDO: "Soluble polymer complexes having AlQ3-type pendent groups" MACROMOLECULAR RAPID COMMUNICATIONS, vol. 25, 7 June 2004 (2004-06-07), pages 1171-1174, XP002417647**

EP 1 637 545 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Field of Technology

This invention relates to a novel luminescent organic polymer metal complex and a composition comprising said luminescent organic polymer metal complex and formable into film by a wet process and to a process for producing the same and, more particularly, this invention relates to a luminescent organic polymer metal complex useful as a material for the luminescent layer of an organic electroluminescent element (organic EL element) and a luminescent organic polymer metal complex composition formable into film by a wet process and to a process for producing the same.

### Background Technology

Organic El elements are capable of exhibiting surface luminescence and potentially allow manufacture of large-area luminescent elements and they are expected to find applications in displays of television, personal computers, family computers and the like, backlight of liquid crystal displays and a variety of advertising towers and indicator lamps.
In particular, from the time when tris(8-hydroxyquinolinato)aluminum ($Alq_3$) was reported to be a material having both electron-transporting and light-emitting abilities for the first time, a large number of studies have been made on aluminum complexes containing 8-hydroxyquinoline or its derivative as a ligand. Moreover, a large number of organic metal complexes other than $Alq_3$ and its derivatives have also been reported as materials for organic EL elements.
Now, $Alq_3$ excels in fastness, polychroism, brightness and the like and still retains its importance even today, but it faces problems such as the following. When used in an organic EL element, $Alq_3$ must be formed into a thin film on a substrate by vacuum deposition and the larger the area of a luminescent element, the larger an apparatus for vacuum deposition becomes; that is, this compound is not suited for the manufacture of large-area luminescent elements. Moreover, $Alq_3$ gradually crystallizes due to thermal motion while acting as a luminescent element and suffers losses in durability and service life.
One of the methods known to solve the aforementioned problems is to coordinate a polymer itself as a ligand to a metal ion: for example, it is proposed that a solution of tris[5-(methacryloyloxyethoxymethyl)-8-hydroxyquinolinato] aluminum which has been obtained by introducing a polymerizable group to $Alq_3$ is applied to a substrate by the spin coating process and then photopolymerized on the spot to form an insoluble highly crosslinked thin film on the substrate (WO02/068560 pamphlet). However, this method uses a photopolymerization initiator to effect on-the-spot photopolymerization of the polymerizable group on the substrate and there is the possibility that this photopolymerization initiator becomes taken in the thin film being formed on the substrate and hinders emission of light and, further, the change in volume during polymerization distorts the thin film and the film tends to peel off easily.
According to another known method, a polymer metal complex comprising a polymer ligand and a low-molecular-weight ligand and soluble in solvents is prepared and used to form a thin film on the substrate. For example, the following polymers are proposed for such ligands; a polymer prepared by introducing 8-hydroxyquinoline group to the side chain of a polyethersulfone through an imide linkage [Journal of Polymer Science, Part A: Polymer Chemistry, vol. 38, p. 2887 (2000)] and a polymer obtained by first preparing an $XAlq_2$ type complex monomer by linking the position 5 of one of 8-hydroxyquinoline groups in $Alq_3$ to the position 5 of norbornane through the spacer group [$-CH_2NH(CH_2)_6-$] and polymerizing the monomer by ring-opening metathesis [Macromolecules, vol. 36, p. 1766 (2003)]. However, these polymers are copolymers that contain a repeating unit linked to an aluminum complex and another repeating unit free of an aluminum complex and they face such problems as difficulty in introducing aluminum complexes in high proportion to the repeating unit of the polymer and low efficiency as electroluminescent elements.
Still more, the reaction product of a polymer containing an amino group with an aromatic compound containing aldehyde and hydroxyl groups (JP2001-131,542A and JP2001-185,357A) or a polymer containing a β-diketone group as a ligand in its side chain (JP2001-185,357A and JP2001-220,579A) is proposed for the aforementioned polymer ligand. However, the polymers cited here do not contain 8-hydroxyquinoline as a ligand in their side chains. In consideration of the fact that $Alq_3$ is a luminescent material with a particularly high electron-transporting ability and of the aforementioned merits of polymer luminescent materials, there is a strong demand for development of ligands containing 8-hydroxyquinoline derivatives in their side chains.

### Disclosure of the Invention

The inventors of this invention have conducted intensive studies on luminescent organic polymer metal complexes of the $Alq_3$ type which exhibit excellent fastness, polychroism, brightness and the like characteristic of Alqs, contain polymer ligands and low-molecular-weight ligands, are readily soluble in solvents and allow manufacture of large-area thin film by a wet process, found surprisingly that the use of an 8-hydroxyquinoline derivative having a bulky substituent as a low-molecular-weight ligand provides excellent solvent solubility suitable for manufacture of thin film by

a wet process even when a homopolymer ligand containing an 8-hydroxyquinoline group is used as a polymer ligand and completed this invention.

The inventors of this invention have further found that the incorporation of a luminescent organic metal complex of the $Alq_3$ type containing only an 8-hydroxyquinoline derivative having a bulky substituent as a low-molecular-weight ligand in a luminescent organic polymer metal complex of the $Alq_3$ type containing a polymer ligand and a low-molecular-weight ligand improves the solvent solubility of the luminescent organic polymer metal complex and provides a luminescent organic polymer metal complex composition suitable for formation of film by a wet process and completed this invention.

Accordingly, an object of this invention is to provide a luminescent organic polymer metal complex of the $Alq_3$ type which contains a polymer ligand and a low-molecular-weight ligand, shows excellent solvent solubility and is suitable for formation of film by a wet process.

Another object of this invention is to provide a luminescent organic polymer metal complex composition which comprises the aforementioned luminescent organic polymer metal complex of the $Alq_3$ type containing a polymer ligand and a low molecular weight ligand, shows excellent solvent solubility and is capable of forming film by a wet process.

A further object of this invention is to provide a process for producing the aforementioned luminescent organic polymer metal complexe and a composition thereof.

This invention relates to a luminescent organic polymer metal complex as defined in claim 1.

This invention also relates to a luminescent organic polymer metal complex composition as defined in claim 4.

Further, this invention relates to a process for producing a luminescent organic polymer metal complex composition as defined in claim 8.

According to this invention, a polymer ligand (polyQ) used for the production of a polymer metal complex (HM-C) represented by formula (1) is a polymer having a repeating unit (Y) in which a complex-forming 8-hydroxyquinoline derivative (Q) is introduced, if necessary, through a spacer group (X). The polymer ligand (polyQ) may be a polymer having one kind of repeating unit (Y) or a copolymer having two kinds or more of repeating unit (Y).

The repeating unit (Y) constituting the polymer in the polymer metal complex (HM-C) is subject to no specific restrictions other than that an 8-hydroxyquinoline derivative (Q)can be introduced to the repeating unit, if necessary, through a spacer group (X); for example, the polymer in question can be prepared by addition polymerization, polycondensation or ring-opening metathetical polymerization. Examples are repeating units (ethylenic linkage) derived from acrylic acid compounds such as acrylate esters, methacrylate esters, acrylamide and methacrylamide, vinyl esters such as vinyl acetate, N-vinyllactams such as N-vinylpyrrolidone, vinyl ethers, allyl esters, allyl ethers and vinyl aromatic compounds such as styrene, repeating units derived from a variety of dienes such as butadiene and isoprene and those derived from amides, imides, esters, ethersulfones and vinylcyclopentane. The repeating units derived from methacrylate esters, styrene and vinylcyclopentane are preferred.

The aforementioned spacer group (X), provided wherever necessary in forming a polymer ligand (polyQ) is a group linking the backbone of a polymer consisting of a repeating unit (Y) to the quinoline nucleus of an 8-hydroxyquinoline derivative (Q) and it can be provided in several ways. A substituent capable of linking to an 8-hydroxyquinoline derivative (Q) can be introduced as a spacer group to the monomer which is to polymerize to constitute a repeating unit (Y); conversely, a substituent capable of linking to the monomer is first introduced to the 8-hydroxyquinoline derivative (Q); or, substituents capable of reacting with each other to form a linkage are introduced respectively to the monomer and 8-hydroxyquinoline derivative (Q). Preferably, the spacer group contains linearly linked 0-15 atoms, preferably 5-10 atoms, of carbon, hydrogen, halogen, oxygen, nitrogen, sulfur, silicon and phosphorus and it may be a diol such as ethylene glycol, a diamine such as ethylenediamine or an alkyl/aryl chain.

The derivatives of 8-hydroxyquinoline having the following substituents at one or two or more of the positions 2 to 7 are useful as an 8-hydroxyquinoline derivative (Q) constituting the aforementioned polymer ligand (polyQ): halogens, saturated or unsaturated hydrocarbon groups containing 1-20 carbon atoms and having a linear, branched or annular structure or a mixed structure thereof, alkoxy groups containing 1-20 carbon atoms, alkylamino groups containing 1-20 carbon atoms, alkylthio groups containing 1-20 carbon atoms, alkylsulfonyl groups containing 1-20 carbon atoms, alkyloxyalkyl groups containing 2-20 carbon atoms, alkylthioalkyl groups containing 2-20 carbon atoms, alkanoyl groups containing 2-20 carbon atoms, aroyl groups, monoalkylaminoalkyl groups containing 2-20 carbon atoms, dialkylaminoalkyl groups containing 3-20 carbon atoms, phenylazo groups whose functional groups are substituted or unsubstituted, anilinoalkyl groups whose functional groups are substituted or unsubstituted and $-SO_3Na$. In case the number of substituents is two or more, they may be identical with or different from each other.

The process for producing the polymer ligand (polyQ) is not restricted. For example, a polymerizable alkoxy (meth)acrylate group is introduced to an 8-hydroxyquinoline derivative (Q) by chloromethylation followed by reaction with a hydroxyalkyl (meth)acrylate and the resulting 8-hydroxyquinoline derivative containing the alkoxy (meth)acrylate group is polymerized in the presence of a radical initiator such as AIBN (refer to patent literature 1). Alternatively, a diamine having an 8-hydroxyquinoline group is polycondensed to give a polyamide or polyimide or a norbornane derivative having an 8-hydroxyquinoline group is polymerized readily by ring-opening metathesis in the presence of a ruthenium

catalyst.

In the course of the polymerization of the aforementioned 8-hydroxyquinoline derivative (Q) containing a polymerizable substituent in the presence of a radical initiator for the production of the polymer ligand (polyQ), there may develop a situation where the 8-hydroxyquinoline derivative (Q) is a phenolic compound capable of capturing radicals and, when submitted to the polymerization with the hydroxyl group bare at the position 8, the hydroxyl group captures radicals and retards the polymerization reaction. In such a case, it is preferable to adopt the following procedure; the hydroxyl group at the position 8 of the 8-hydroxyquinoline derivative (Q) containing a polymerizable substituent is treated with a trialkylsilyl halide to introduce a trialkylsilyl group to the position 8, the resulting derivative is polymerized in the presence of a radical initiator such as AIBN to effect the polymerization of the alkoxy (meth)acrylate group and thereafter the trialylsilyl group is eliminated from the polymer.

The formation of a polymer metal complex (HM-C) represented by the aforementioned formula (1) requires a low-molecular-weight ligand (K) consisting of an 8-hydroxyquinoline derivative (K) represented by the aforementioned formula (2) and the substituents $R_1$-$R_6$ are selected from hydrogen, halogens, saturated or unsaturated hydrocarbon groups containing 1-20 carbon atoms and having a linear, branched or annular structure or a mixed structure thereof, alkoxy groups containing 1-20 carbon atoms, alkylamino groups containing 1-20 carbon atoms, alkylthio groups containing 1-20 carbon atoms, alkylsulfonyl groups containing 1-20 carbon atoms, alkyloxyalkyl groups containing 2-20 carbon atoms, alkylthioalkyl groups containing 2-20 carbon atoms, alkanoyl goups containing 2-20 carbon atoms, aroyl groups, nonoalkylaminoalkyl groups containing 2-20 carbon atoms, dialkylaminoalkyl groups containing 3-20 carbon atoms, phenylazo groups whose functional groups are substituted or unsubstituted, anilinoalkyl groups whose functional groups are substituted or unsubstituted and $-SO_3Na$; at least one of the substituents $R_1$, $R_4$ and $R_6$ is a bulky substituent selected from saturated or unsaturated hydrocarbon groups containing 6-20 carbon atoms and having a linear, branched or annular structure or a mixed structure thereof, alkyloxyalkyl groups containing 2-20 carbon atoms, alkanoyl groups containing 2-20 carbon atoms, dialkylaminoalkyl groups containing 3-20 carbon atoms, phenylazo groups whose functional groups are substituted or unsubstituted and anilinoalkyl groups whose functional groups are substituted or unsubstituted and particularly preferred derivatives are 7-(ethyl-1-methyloctyl)-8-hydroxyquinoline and 7-(1-vinyl-3,3,6,6-tetramethylhexyl)-8-hydroxyquinoline.

The divalent to tetravalent metal ions ($M^{n+}$) constituting the aforementioned polymer metal complex (HM-C) can be chosen freely from the metal ions used hitherto in organic metal complexes of this kind; for example, aluminum ions ($Al^{3+}$), beryllium ions ($Be^{2+}$), cadmium ions ($Cd^{2+}$), cerium ions ($Ce^{3+}$), cobalt ions ($Co^{3+}$), chromium ions ($Cr^{3+}$), copper ions ($Cu^{2+}$), iron ions ($Fe^{3+}$), gallium ions ($Ga^{3+}$), germanium ions ($Ge^{4+}$), indium ions ($In^{2+}$), manganese ions ($Mn^{2+}$), nickel ions ($Ni^{2+}$), ruthenium ions ($Ru^{3+}$), osmium ions ($Os^{3+}$) and titanium ions ($Ti^{4+}$). Preferred are aluminum ions ($Al^{3+}$), gallium ions ($Ga^{3+}$) and beryllium ions ($Be^{2+}$). In the cases where aluminum ions ($Al^{3+}$) are used, the aluminum compounds useful for the synthesis of the aforementioned polymer metal complex (HM-C) are trialkylaluminums such as trimethylaluminum and triethylaluminum and trialkoxyaluminums such as triisopropoxyaluminum.

According to this invention, an organic polymer metal complex (HM-C) represented by the aforementioned formula (1) shows excellent solubility in a variety of solvents by itself and can singly be formed into film by a wet process; in some cases, however, mixing it with a low-molecular-weight complex (LM-C) represented by the aforementioned formula (3) may further improve its solvent solubility

Thus, a luminescent organic metal complex composition prepared according to this invention comprises a polymer metal complex (HM-C) represented by the aforementioned formula (1) and a low-molecular-weight metal complex (LM-C) represented by the aforementioned formula (3) as principal components. In the low-molecular-weight metal complex (LM-C), only a low-molecular-weight ligand (K) consisting of an 8-hydroxyquinoline derivative (K) is coordinated to a divalent to tetravalent metal ion ($M^{n+}$), the low-molecular-weight ligand (K) and the metal ion being the same as in the polymer metal complex (HM-C).

A variety of luminescent organic metal complex compositions can be obtained by preparing polymer metal complexes (HM-C) and low-molecular-weight metal complexes (LM-C) separately and dissolving them in a specified solvent at a specified ratio while making use of various combinations of polymer metal complexes (HM-C), low-molecular-weight compound metal complexes (LM-C) and metal ions ($M^{n+}$). A composition in which the same metal ion ($M^{n+}$) and the same low-molecular-weight ligand (K) are used in both polymer metal complex (HM-C) and low-molecular-weight metal complex (LMC) can be prepared easily by reacting 1 equivalent of a compound of a divalent to tetravalent metal, 0.1-1 equivalent, preferably 0.2-0.5 equivalent, of a polymer ligand (polyQ) and 1-3.9 equivalents, preferably 1.5-2.8 equivalents, of a low-molecular-weight ligand (K) in a specified solvent.

The ratio of the polymer metal complex (HM-C) to the low-molecular-weight metal complex (LM-C) in this luminescent organic metal complex composition is not limited; however, from the viewpoint of solvent solubility and mechanical strength of film, the molar ratio (HM-C)/(LM-C) is controlled normally at 0.2 or more, preferably at 0.5 or more.

Solvents which are inert to polymer metal complexes (HN-C) and low-molecular-weight metal complexes (LM-C) and capable of dissolving the two can be used in the preparation of the aforementioned luminescent organic metal complex compositions; for example, chlorine-containing solvents such as chloroform, methylene chloride and dichloroethane, ethers such as tetrahydrofuran, aromatic hydrocarbons such as toluene and xylene, ketones such as acetone and methyl ethyl ketone and esters such as ethyl acetate, butyl acetate and ethyl cellosolve acetate.

In forming film from a luminescent organic metal complex composition according to this invention, it is allowable to add a low-molecular-weight coloring matter or a low-molecular-weight compound capable of transporting holes to a solution of the composition, if necessary.

The coloring matters useful for this purpose include nile red, coumarin 6 and quinacridone while the compounds capable of transporting holes include 1,1-bis[4-[N,N'-di(p-tolyl)amino]phenyl]cyclohexane and N,N'-diphenyl-N,N'-di(m-tolyl)benzidine.

In the preparation of film from a luminescent organic metal complex composition containing a polymer metal complex (HM-C) or a polymer metal complex (HM-C) and a low-molecular-weight metal complex (LM-C) according to this invention, it is possible to use any of the publicly known processes suitable for the purpose; for example, spin coating, casting, gravure coating, microgravure coating, bar coating, wire bar coating, roll coating, dip coating, spray coating, screen printing, flexo printing, offset printing and ink jet printing.

A luminescent organic polymer metal complex and a composition thereof prepared according to this invention comprise an organic metal complex of the $Alq_3$ type, but they show excellent solvent solubility suitable for forming large-area film by a wet process while retaining excellent properties such as fastness, polychroism and brightness characteristic of $Alq_3$ and they are industrially extremely useful.

Brief Description of the Drawings

Fig. 1 shows the synthetic route used in the examples of this invention for the production of luminescent organic polymer metal complexes.

Fig. 2 shows two $^1$H-NMR spectra (400 MHz, $CDCl_3$) obtained in Example 1: the spectrum (A) refers to the reaction mixture (organic polymer metal complex composition) and the specturm (B) to the low-molecular-weight metal complex (LM-C, $Al\text{-}K_3$).

Fig. 3 shows two $^1$H-NMR spectra: the spectrum (A) is the differential spectrum of the reaction mixture and the low molecular-weight metal complex (LM-C, $Al\text{-}K_3$) of Example 1 shown in Fig. 2 and the spectrum (B) is that of the polymer ligand ($polyQ^1$) alone.

Fig. 4 shows the $^1$H-NMR spectrum (400 MHz, $CDCl_3$) of the polymer metal complex ($polyQ^2\text{-}Al\text{-}K_2$) of Example 3.

Fig. 5 shows the IR spectrum of the polymer metal complex ($polyQ^2\text{-}Al\text{-}K_2$) of Example 3.

Preferred Embodiments of the Invention

A preferred mode of execution of this invention will be described concretely below with reference to the synthetic route shown in Fig. 1.

[Synthesis of polymer ligand (polyQ)]

Synthetic Example 1 (Synthesis of $polyQ^1$)

In a reaction vessel were placed 26.2 g (0.201 mole) of 8-hydroxyquinoline ($Q^1$), 36 mL of concentrated hydrochloric acid and 32 mL (0.3 mole) of 28 wt% formalin and dry hydrogen chloride gas was introduced to the mixture at room temperature for 90 minutes.

After the reaction was over, the precipitates formed were collected by filtration and dried to give 37.2 g (yield 80%) of the chloromethylated product ($Q^1\text{-}CH_2Cl \cdot HCl$) as an amorphous yellow solid. The melting point of the product was 280 °C(with decomposition) and agreed well with the literature value [280°C (with decomposition), J. Org. Chem., vol. 26, p.4078 (1961)].

Following this, 14.5 g (0.0629 mole) of the chloromethylated product ($Q^1\text{-}CH_2Cl \cdot HCl$) and 60 mL (0.43 mole) of 2-hydroxyethyl methacrylate, in excess of the chloromethylated product, were placed in a reaction vessel and they were allowed to react at 60 °C for 2 days in an atmosphere of argon.

Upon completion of the reaction, the reaction mixture was allowed to cool to room temperature, 150 mL of water was added, the mixture was then made alkaline by addition of dilute ammonia water and the precipitates were collected by filtration, washed with dilute ammonia water and dried in vacuum overnight.

The crude product was dissolved in 650 mL of tetrahydrofuran (THF), the insoluble matters were filtered off, the filtrate was concentrated under reduced pressure and the solid obtained was recrystallized twice from hexane to give 12.5 g (43.5 millimoles, yield 69%) of a product ($Q^1\text{-}CH_2\text{-}HMA$) containing 2-ethoxy methacrylate group. The melting

point of the product was 89.2-89.5 °C and agreed well with the literature value (89°C).

In 55 ml of benzene were dissolved 7.00 g (24.4 millimoles) of the product ($Q^1$-$CH_2$-HMA) and 231 mg (1.4 millimoles) of AIBN, the solution was sealed in an ampoule in an atmosphere of argon and the ampoule was heated in an oil bath at 65 °C for 20 minutes and then allowed to cool for 1 hour to room temperature.

The ampoule was opened and stripped of the benzene and a light green resinous solid remaining at the bottom of the ampoule was dissolved in 50 mL of DMF, filtered and reprecipitated by addition of 2 L of methanol to give 3.75 g (yield 54%) of a white solid polymer (polymer ligand, poly$Q^1$).

The $^1$H-NMR data of the polymer (poly$Q^1$) were as follows.

$^1$H-NMR (400 $MH_2$, $CDCl_3$): δ (ppm) = 0.75 (br. s, 3H), 1.67 (br. s, 2H), 3.35 (br. s, 2H), 3.90 (br. s, 2H), 4.58 (br. s, 2H), 6.89 (br. s, 1H), 7.21 (br. s, 1H), 7.33 (br. s, 1H), 8.25 (br. s, 1H), 8.66 (br. s, 1H), 9.73 (br. s, 1H).

Synthetic Example 2 (Synthesis of poly$Q^2$)

In a reaction vessel were placed 45.0 g (0.15 mole) of 7-(4-ethyl-1-methyloctyl)-8-hydroxyquinoline ($Q^2$), 75 mL of concentrated hydrochloric acid and 25 mL (0.23 mole) of 28 wt% formalin and dry hydrogen chloride gas was introduced to the mixture at 65-75°C for 17 hours. The reaction product was a mixture of an aqueous layer and a dark ocherous solid.

After the reaction was over, the product was extracted four times with 100 ml of chloroform from which the stabilizer had been removed in advance and the product was reprecipitated by addition of 4 L of ether to give 23 g of an amorphous yellow solid.

The product was identified as $Q^2$-$CH_2Cl$ · HCl (yield 57%) or $Q^2$ chloromethylated at the position 5 on the basis of its $^1$H-NMR and $^{13}$C-NMR spectra.

$^1$H-NMR (400 MHz, $CDCl_3$): δ (ppm) = 9.14 (1H, d, J = 7.2 Hz), 9.04 (1H, br. s), 7.99 (1H, br. s), 7.75 (1H, s), 8.06 (2H, s), 3.68 (1H, m), 1.64 (2H, br. d, J = 5.6 Hz), 1.31-1.18 (14H, m), 0.87-0.75 (6H, m).

$^{13}$C-NMR (400 MHz, $CDCl_3$): δ (ppm) = 146, 142, 141, 140, 132, 130, 127, 125, 120, 43, 39, 34, 32.9, 32.6, 31, 29, 26, 23, 21, 14, 11.

Thereafter, 10.0 g (0.026 mole) of the chloromethylated product ($Q^2$-$CH_2Cl$ · HCl) and 25 mL (0.21 mole) of 2-hydroxyethyl methacrylate (HMA), in excess of the chloromethylated product, were placed in a reaction vessel and the mixture was allowed to react at 60-65°C for approximately 60 hours in an atmosphere of argon.

After the reaction was over, 400 mL of water was added to the reaction mixture with stirring, then 5 wt% ammonia water was added to the mixture to adjust the pH at 10 or thereabouts, the mixture was left standing, the aqueous layer was removed by decantation, and the remaining white viscous solid was extracted with chloroform and submitted to silica gel chromatography (benzene-cyclohexane) to isolate 6.2 g (yield 54%) of a light green viscous liquid.

The product thus obtained was identified as $Q^2$-$CH_2$-HMA or $Q^2$ to which the 2-ethoxy methacrylate group had been introduced on the basis of the following $^1$H-NMR and $^{13}$C-NMR spectral data.

$^1$H-NMR (400 MHz, $CDCl_3$): δ (ppm) = 8.76 (1H, d, 4 Hz), 8.46 (1H, d. 8.4 Hz), 7.90 (1H, dd, 8.4, 4.2 Hz), 7.26 (1H, s), 6.07 (1H, s), 5.55 (1H, s), 4.90 (2H, s), 4.31 (2H, t, 4.8 Hz), 3.73 (2H, t, 4.8 Hz), 3.36 (1H, q), 1.92 (3H, s), 1.69-1.62 (2H, m), 1.32-0.75 (20H, m).

$^{13}$C-NMR (400 MHz, $CDCl_3$): δ (ppm) = 167, 149, 147, 139, 136, 133, 127.9, 127.6, 126, 123, 121, 72, 67, 64, 39, 34, 33, 31, 29, 26, 23, 21, 18, 14, 11.

In 35 mL of benzene were dissolved 6.2 g (14 millimoles) of the product ($Q^2$-$CH_2$-HMA) and 155 mg (1 millimole) of AIBN, the solution was introduced to an ampoule in an atmosphere of argon, sealed and allowed to react at 65-75°C for 10 hours.

After the reaction was over, the ampoule was opened, the reaction mixture was diluted by addition of 100 mL of benzene and added dropwise with stirring to 1 L of methanol to precipitate the product. The methanol was removed by decantation, the precipitates were extracted with benzene, the extract was stripped of the solvent and dried in vacuum at 60°C for 12 hours to give 2.9 g (yield 47%) of a polymer (polymer ligand, poly$Q^2$) as a light green resinous solid.

The $^1$H-NMR spectral data of the polymer (poly$Q^2$) were as follows.

$^1$H-NMR (400 MHz, $CDCl_3$): δ (ppm) = 8.5 & 8.3 (2H, br), 7.25 (2H, br), 4.69 (2H, br), 4.00 (2H, br), 3.5 & 3.3 (2H, br), 1.5-2.5 (3H, br), 1.5-0.7 (25H, br. m).

Synthetic Example 3 (Synthesis of poly$Q^2$)

In 5 mL of dry DMF were dissolved 2.13 g (4.82 millimoles) of the product ($Q^2$-$CH_2$-HMA) prepared as in the aforementioned Synthetic Example 2 and 0.872 g (5.79 millimoles) of tert-butyldimethylsilyl chloride, 0.82 g (12.0 millimoles) of imidazole was added to the resulting solution with stirring at room temperature, the mixture was stirred continuously at room temperature for 10 hours, the reaction was terminated by addition of a saturated aqueous solution of bicarbonate of soda and the reaction mixture was extracted with hexane. The organic layer obtained was dried and

purified by silica gel chromatography (hexane-ethyl acetate) to give 2.68 g (yield 99% or more) of a colorless oily product [$Q^2$(OSi)-$CH_2$-HMA] or $Q^2$-$CH_2$-HMA whose hydroxyl group at the position 8 had been silylated.

The $^1$H-NMR spectral data of the product [$Q^2$(OSi)-$CH_2$-HMA] were as follows.
$^1$H-NMR (400 MHz, $CDCl_3$): δ (ppm) = 8.76 (1H, dd, 2, 4 Hz), 8.41 (1H, dd. 2, 9 Hz), 7.35 (1H, s), 7.32 (1H, dd, 4, 9 Hz), 6.08 (1H, br. s), 5.55 (1H, quintet, 1 Hz), 4.91 (2H, s), 4.32 (2H, t, 5 Hz), 3.74 (2H, t, 5 Hz), 3.62 (1H, sextet, 7 Hz), 1.93 (3H, s), 1.7-0.7 (22H, m), 1.08 (9H, s), 0.38 (3H, s), 0.30 (3H, s).

Thereafter, 1.5 g (2.7 millimoles) of the product [$Q^2$(OSi)-$CH_2$-HMA] obtained above and 22 mg (0.14 millimole) of AIBN were dissolved in 20 mL of benzene and the solution was sealed in an ampoule in an atmosphere of argon and heated at 65-75 °C for 10 hours. The reaction mixture was diluted with 50 mL of benzene and added dropwise with stirring to 400 mL of methanol to precipitate the product. The methanol was removed by decantation, the precipitates were extracted with ether and the extract was stripped of the solvent and dried under reduced pressure to give 600 mg of a polymer [poly$Q^2$(OSi)] as an amorphous light yellow solid.

The $^1$H-NMR spectral data of the polymer [poly$Q^2$(OSi)] were as follows.
$^1$H-NMR (400 MHz, $CDCl_3$): δ (ppm) = 8.7-8.5 (1H, br), 8.4-8.2 (1H, br), 7.4-7.1 (2H, br), 4.75 (2H, br), 4.05 (2H, br), 3.54 (2H, br), 1.96 (1H, br), 1.5-0.9 (29H, br. m), 0.8-0.6 (6H, br. m), 0.4-0.2 (6H, br. m).

In 30 mL of THF was dissolved 300 mg of the polymer [poly$Q^2$(OSi)], 2 equivalents of tetrabutylammonium fluoride was added to the solution and stirred at room temperature for 10 minutes. The reaction was terminated by addition of a saturated aqueous solution of ammonium chloride and the reaction mixture was separated by treating with ether and water. The organic layer was dried and stripped of the solvent and the highly viscous residue was dissolved again in ether. Upon addition of methanol to the solution, a light green solid precipitated out gradually. The solid was collected by filtration and dried to give 215 mg of a polymer (polymer ligand, poly$Q^2$).

The $^1$H-NMR spectral data of the polymer (poly$Q^2$) were as follows.
$^1$H-NMR (400 MHz, $CDCl_3$): δ (ppm) = 8.66 (1H, br. s), 8.73 (1H, br. s), 7.28 (2H, br), 4.77 (2H, br. s), 4.04 (2H, br), 3.55 (2H, br), 3.32 (1H, br. s), 2.1-0.7 (27H, br. m).

The intrinsic viscosity [n] of the polymer measured by viscometry was 0.24 (THF).

Example 1 (Synthesis of composition poly$Q^1$-Al-$K_2$ + Al-$K_3$)

In a reaction vessel were placed 800 mg (2.78 millimoles) of the polymer ligand (poly$Q^1$) obtained in Synthetic Example 1, 6.64 g (22.3 millimoles) of 7-(4-ethyl-1-methyloctyl)-8-hydroxyquinoline as a low-molecular-weight ligand (K) and 100 mL of dry THF, the solution was cooled in a dry ice-acetone cooling bath in an atmosphere of argon, 8.4 mL of a solution of trimethylaluminum ($AlMe_3$) in hexane with a concentration of 1.00 mole/L or 8.4 millimoles of $AlMe_3$ was added in small portions to the solution with stirring and the solution was stirred for another 30 minutes after the addition was over. The solution turned gradually yellow in color in the meantime.

After this reaction period, the cooling bath was removed to let the temperature return to room temperature and the reaction was allowed to proceeed at room temperature for 3 days while no change was observed apparently except for separation of a solid in a very small amount. Thereafter, the reaction was terminated by addition of a small amount of methanol and a uniformly yellow solution was obtained as the reaction mixture.

The $^1$H-NMR spectrum (400 MHz, $CDCl_3$) of the reaction mixture is shown in Fig. 2 (A). This spectrum contains the spectrum [Fig. 2 (B)] of the low-molecular-weight metal complex (LM-C, Al-$K_3$) in which three equivalents of the low-molecular-weight ligand (K) are coordinated to aluminum. Moreover, the differential spectrum of the reaction mixture and the low-molecular-weight metal complex (LM-C, Al-$K_3$) shown in Table 3 (A) does not agree with the single spectrum [Fig. 3 (B)] of the polymer ligand (poly$Q^1$).

Therefore, the polymer ligand (poly$Q^1$) in the reaction mixture is present as an aluminum complex and, theoretically, the reaction mixture is presumed to be an organic polymer metal complex composition comprising 2.53 g (2.78 millimoles) of a polymer metal complex (HM-C) in which 1 equivalent of the polymer ligand (poly$Q^1$) and 2 equivalents of the low-molecular-weight ligand (K) are coordinated to an aluminum ion ($Al^{3+}$) and 5.12 g (5.62 millimoles) of a low-molecular-weight metal complex (LM-C) in which 3 equivalents of the low-molecular-weight ligand (K) are coordinated to an aluminum ion ($Al^{3+}$ ) at a molar ratio HM-C/LM-C of 0.5 dissolved in a mixed solvent of 100 mL of THF, 8.4 mL of hexane and 0.1 mL of methanol.

The fluorescent spectrum of the organic polymer metal complex composition obtained in Example 1 was measured by dissolving 0.05 mL of the solution of the comosition in 3 mL of chloroform and using a fluorospectrometer (SHIMADZU RF-5300PC, available from Shimadzu Corporation) and the fluorescent property was recognized [( $\lambda_{ex}$ = 400 nm): $\lambda_{em}$ = 533 nm in $CHCl_3$)]. Furthermore, the solution obtained in Example 1 was cast over a glass plate, air-dried overnight and then dried in vacuum at 50 °C for 12 hours to give a light yellow transparent thin film which also showed the fluorescent property [($\lambda_{ex}$ = 400 nm): $\lambda_{em}$ = 533 nm].

Example 2 (Synthesis of composition polyQ$^2$-Al-K$_2$ + Al-K$_3$)

A reaction mixture was obtained as a uniformly yellow solution in the same manner as in Example 1 except for dissolving 1.12 g (2.5 millimoles) of the polymer ligand (polyQ$^2$) obtained in Synthetic Example 2 and 4.48 g (15.1 millimoles) of 7-(4-ethyl-1-methyloctyl)-8-hydroxyquinohne as a low-molecular-weight ligand (K) in 20 mL of dry THF in a reaction vessel.

The reaction mixture was an organic polymer metal complex composition comprising 2.11 g (1.98 millimoles) of a polymer metal complex (HM-C) in which 1 equivalent of the polymer ligand (polyQ$^2$) and 2 equivalents of the low-molecular-weight ligand (K) are coordinated to an aluminum ion ($Al^{3+}$ ) and 1.56 g (1.70 millimoles) of a low-molecular-weight metal complex (LM-C) in which 3 equivalents of the low-molelcular-weight ligand (K) are coordinated to an aluminum ion ($Al^{3+}$ ) at a molar ratio HM-C/LM-C of 1.16 dissolved in a mixed solvent of 20 mL of THF, 6 mL of hexane and 0.1 mL of methanol.

Example 3 (Isolation of polyQ$^2$-Al-K$_2$)

The solution of the organic polymer metal complex composition obtained in Example 2 was added dropwise to 500 mL of methanol with stirring thereby dissolving the low-molecular-weight metal complex (LM-C or Al-K$_3$) in the methanol and precipitating the crude polymer metal complex (HM-C or polyQ$^2$-Al-K). The precipitates were collected by filtration to recover 2.87 g of a yellow solid, which was further purified by reprecipitation to give 2.11 g (yield 79%) of the polymer metal complex (HM-C or polyQ$^2$-Al-K).

This polymer metal complex is sparingly soluble in a solvent such as methanol, ethanol and hexane and readily soluble in a solvent such as THF, benzene and chloroform. When measured for the fluorescent spectrum as in Example 1, it showed the fluorescent property [($\lambda_{ex}$ = 400 nm): $\lambda_{em}$ = 537 nm in $CHCl_3$)]. Likewise, the polymer metal complex was cast on a glass plate, air-dried overnight and then dried in vacuum at 50 °C for 12 hours to give a yellow transparent thin film which also showed the fluorescent property [($\lambda_{ex}$ = 400 nm): $\lambda_{em}$ = 537 nm].

In Example 3, the methanol solution remaining after precipitation of the polymer metal complex (HM-C) yielded 1.56 g (yield 34%) of the low-molecular-weight metal complex (Al-K$_3$) as a yellow viscous liquid.

The low-molecular-weight metal complex (Al-K$_3$) showed the fluorescent property [($\lambda_{ex}$ = 400 nm): $\lambda_{em}$ = 533 nm in $CHCl_3$)] when measured for the fluorescent spectrum as in Example 1.

The polymer metal complex (polyQ$^2$-Al-K$_2$) was submitted to elemental analysis with the following results.

[Elemental analysis]

Found: C, 73.80; H, 9.39; N, 3.75.
Calcd. for $C_{67}H_{94}N_3O_6Al \cdot 1.2H_2O$: C, 74.07; H, 8.95; N, 3.87.

The $^1$H-NMR spectrum (400 MHz, $CDCl_3$) is shown in Fig. 4 and the IR absorption spectrum in Fig. 5.

Example 4 (Synthesis of polyQ$^2$-Al-K$_2$)

The reaction of the polymer (polyQ$^2$) obtained in Synthetic Example 3 and the low-molecular-weight ligand (K) with trimethylaluminum was carried out at room temperature for 5 hours and terminated by addition of 3 mL of methanol to give a yellow reaction mixture in the same manner as in Example 1 with the exception of dissolving 252 mg (0.57 millimole) of the polymer (polyQ$^2$) and 1.36 g (4.55 millimoles) of 7-(4-ethyl-1-methyloctyl)-8-hydroxyquinoline as a low-molecular-weight ligand (K) in 15 mL of dry THF.

The reaction mixture was filtered, 200 mL of methanol was added to the filtrate and the precipitated solid matter was collected by filtration and dried in vacuum to give 456 mg (yield 75%) of the polymer metal complex (polyQ$^2$-Al-K$_2$) as a yellow solid.

The $^1$H-NMR spectrum of the polymer metal complex (polyQ$^2$-Al-K$_2$) obtained in this manner agreed well with that of the polymer metal complex (polyQ$^2$-Al-K$_2$) obtained in Example 3 and shown in Fig. 4.

The polymer metal complex (polyQ$^2$-Al-K$_2$) obtained here in Example 4 is sparingly soluble in methanol, ethanol, hexane or dimethylformamide and readily soluble in other common organic solvents such as THF, benzene and chloroform. The yellow transparent thin film prepared by applying a THF solution of the polymer metal complex to a glass plate by the spin coating process and air-drying showed the fluorescent property [($\lambda_{ex}$ = 400 nm): $\lambda_{em}$ = 537 nm].

Example 5 (Synthesis of poly$Q^2$-Al-$K_2$)

A solution of 500 mg (1.13 millimoles) of the polymer (poly$Q^2$) obtained in Synthetic Example 3, 2.70 g (9.04 millimoles) of 7-(4-ethyl-1-methyloctyl)-8-hydroxyquinoline as a low-molecular-weight ligand (K) and 0.70 g (3.39 millimoles) of triisopropoxyaluminum [$Al(OiPr)_3$] in 30 mL of dry THF was allowed to react with stirring at room temperature for 1 hour and then at reflux temperature for 12 hours to give a slightly turbid yellow reaction solution.

The reaction solution was filtered, the filtrate was added to 800 mL of methanol, and the precipitates were collected by filtration and dried to give 430 mg (yield 36%) of the polymer metal complex (poly$Q^2$-Al-$K_2$) as an amorphous yellow solid.

The polymer metal complex (poly$Q^2$-Al-$K_2$) thus obtained agreed well with the polymer metal complexes obtained in Examples 3 and 4 in respect to the $^1$H-NMR spectrum, solubility, film-forming ability and fluorescent spectrum of thin film.

Industrial Applicability

A luminescent organic polymer metal complex or a composition thereof prepared according to this invention is an organic metal complex of the $Alq_3$ type characterized not only by its excellent fastness, polychroism and brightness but also by its excellent solvent solubility suitable for the production of large-area thin film by a wet process and is industrially extremely useful as a material for the luminescent layer of an organic electroluminescent element (organic EL element).

## Claims

1. A luminescent organic polymer metal complex obtained by the reaction of a polymer ligand (polyQ) having a repeating unit (Y) with an 8-hydroxyquinoline derivative (Q) introduced to its side chain, if necessary, through a spacer group (X), a low-molecular-weight ligand (K) consisting of an 8-hydroxyquinoline derivative (K) and a divalent to tetravalent metal ion ($M^{n+}$) and represented by the following general formula (1)

$$\text{polyQ} \cdot \text{M} \cdot \text{K}_{n-1} \quad (1)$$

wherein said 8-hydroxyquinoline derivative (K) is represented by the following general formula (2);

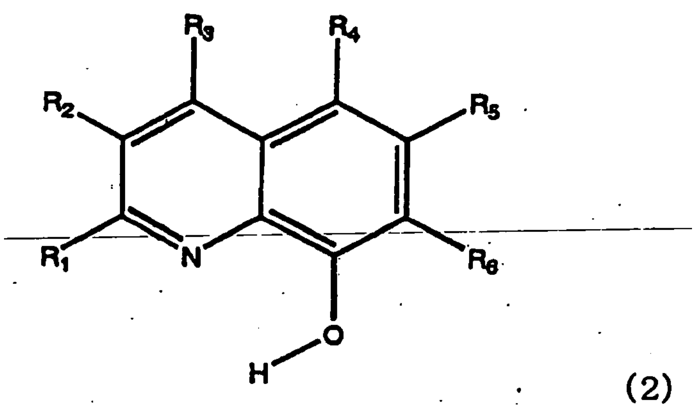

(2)

in formula (2), $R_1$-$R_6$ are substituents selected from hydrogen, halogens, saturated or unsaturated hydrocarbon groups containing 1-20 carbon atoms and having a linear, branched or annular structure or a mixed structure thereof, alkoxy groups containing 1-20 carbon atoms, alkylamino groups containing 1-20 carbon atoms, alkylthio groups containing 1-20 carbon atoms, alkylsulfonyl groups containing 1-20 carbon atoms, alkyloxyalkyl groups containing 2-20 carbon atoms, alkylthioalkyl groups containing 2-20 carbon atoms, alkanoyl groups containing 2-20 carbon atoms, aroyl groups, monoalkylaminoalkyl groups containing 2-20 carbon atoms, dialkylaminoalkyl groups containing 3-20 carbon atoms, phenylazo groups whose functional groups are substituted or unsubstituted, anilinoalkyl groups

whose functional groups are substituted or unsubstituted and $-SO_3Na$ and at least one of the substituents $R_1$, $R_4$ and $R_6$ in said 8-hydroxyquinoline derivative (K) represented by formula (2) is a bulky substituent selected from saturated or unsaturated hydrocarbon groups containing 6-20 carbon atoms and having a linear, branched or annular structure or a mixed structure thereof, alkyloxyalkyl groups containing 2-20 carbon atoms, alkanoyl groups containing 2-20 carbon atoms, dialkylaminoalkyl groups containing 3-20 carbon atoms, phenylazo groups whose functional groups are substituted or unsubstituted and anilinoalkyl groups whose functional groups are substituted or unsubstituted.

**2.** A luminescent organic polymer metal complex as described in claim 1 wherein said 8-hydroxyquinoline group (K) is 7-(4-ethyl-1-methyloctyl)-8-hydroxyquinoline or 7-(1-vinyl-3,3,6,6-tetramethyhexyl)-8-hydroxyquinoline.

**3.** A luminescent organic polymer metal complex as described in any one of claims 1 to 2 wherein said divalent to tetravalent metal ion ($M^{n+}$) is $Al^{3+}$, $Ga^{3+}$ or $Be^{2+}$.

**4.** A luminescent organic polymer metal complex composition formable into film by a wet process comprising a polymer metal complex (HM-C) represented by formula (1) described in any one of claims 1 to 3 and a low-molecular-weight metal complex (LM-C) represented by the following general formula (3)

$$M \cdot K_n \qquad (3)$$

in which only a low-molecular-weight ligand (K) consisting of an 8-hydroxyquinoline derivative (K) is coordinated to a divalent to tetravalent metal ion ($M^{n+}$) wherein said 8-hydroxyquinoline derivative (K) is represented by the following general formula (2);

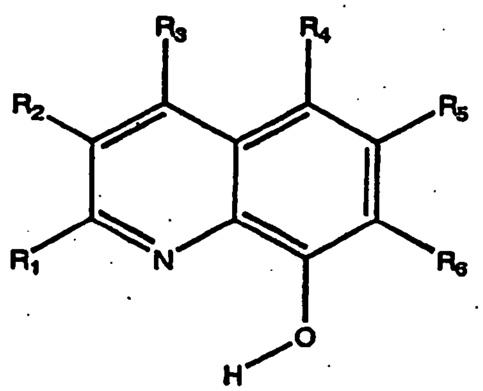

(2)

in formula (2), $R_1$-$R_6$ are substituents selected from hydrogen, halogens, saturated or unsaturated hydrocarbon groups containing 1-20 carbon atoms and having a linear, branched or annular structure or a mixed structure thereof, alkoxy groups containing 1-20 carbon atoms, alkylamino groups containing 1-20 carbon atoms, alkylthio groups containing 1-20 carbon atoms, alkylsulfonyl groups containing 1-20 carbon atoms, alkyloxyalkyl groups containing 2-20 carbon atoms, alkylthioalkyl groups containing 2-20 carbon atoms, alkanoyl groups containing 2-20 carbon atoms, aroyl groups, monoalkylaminoalkyl groups containing 2-20 carbon atoms, dialkylaminoalkyl groups containing 3-20 carbon atoms, phenylazo groups whose functional groups are substituted or unsubstituted, anilinoalkyl groups whose functional groups are substituted or unsubstituted and $-SO_3Na$ and at least one of the substituents $R_1$, $R_4$ and $R_6$ in said 8-hydroxyquinoline derivative (K) represented by formula (2) is a bulky substituent selected from saturated or unsaturated hydrocarbon groups containing 6-20 carbon atoms and having a linear, branched or annular structure or a mixed structure thereof, alkyloxyalkyl groups containing 2-20 carbon atoms, alkanoyl groups containing 2-20 carbon atoms, dialkylaminoalkyl groups containing 3-20 carbon atoms, phenylazo groups whose functional groups are substituted or unsubstituted and anilinoalkyl groups whose functional groups are substituted or unsubstituted.

**5.** A luminescent organic polymer metal complex composition formable into film by a wet process as described in claim

4 wherein said 8-hydroxyquinoline derivative (K) is 7-(4-ethyl-1-methyloctyl)-8-hydroxyquinoline or 7-(1-vinyl-3,3,6,6-tetramethyhexyl)-8-hydroxyquinoline.

**6.** A luminescent organic polymer metal complex composition formable into film by a wet process as described in any one of claims 4 to 5 wherein said divalent to tetravalent metal ion ($M^{n+}$) is $Al^{3+}$, $Ga^{3+}$ or $Be^{2+}$.

**7.** A luminescent organic polymer metal complex composition formable into film by a wet process as described in any one of claims 4 to 6 wherein the molar ratio of said polymer metal complex (HM-C) represented by formula (1) to said low-molecular-weight metal complex (LM-C) or the molar ratio HM-C/LM-C is 0.2 or more.

**8.** A method for producing a luminescent organic polymer metal complex composition formable into film by a wet process which comprises carrying out the reaction of 1 equivalent of a compound of a divalent to tetravalent metal, 0.1-1 equivalent of a polymer ligand (polyQ) having a repeating unit (Y) with an 8-hydroxyquinoline derivative (Q) introduced to its side chain, if necessary, through a spacer group (X) and 1-3.9 equivalents of a low-molecular-weight ligand (K) consisting of an 8-hydroxyquinoline derivative (K) represented by the following general formula (2)

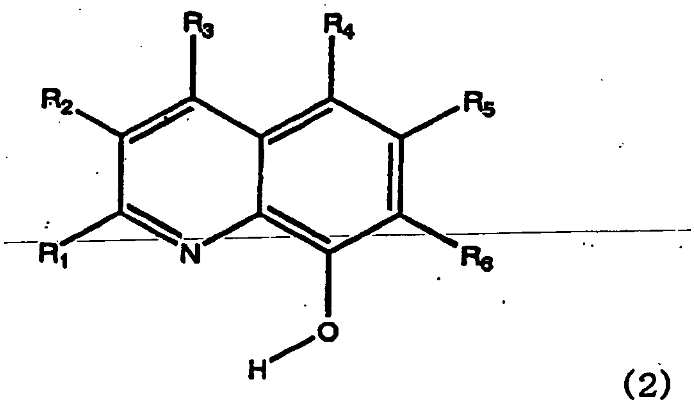

(2)

in a solvent to produce an organic polymer metal complex composition consisting of a polymer metal complex (HM-C) represented by the following general formula (1)

$$\text{polyQ} \cdot M \cdot K_{n-1} \qquad (1)$$

in which a polymer ligand (polyQ) and a low-molecular-weight ligand (K) are coordiated to a divalent to tetravalent metal ion ($M^{n+}$) and a low-molecular-weight metal complex (LM-C) represented by the following general formula (3)

$$M \cdot K_n \qquad (3)$$

in which said low-molecular-weight ligand (K) alone is coordianted to a divalent to tetravalent metal ion ($M^{n+}$); in formula (2), $R_1$-$R_6$ are substituents selected from hydrogen, halogens, saturated or unsaturated hydrocarbon groups containing 1-20 carbon atoms and having a linear, branched or annular structure or a mixed structure thereof, alkoxy groups containing 1-20 carbon atoms, alkylamino groups containing 1-20 carbon atoms; alkylthio groups containing 1-20 carbon atoms, alkyloxyalkyl groups containing 2-20 carbon atoms, alkylthioalkyl groups containing 2-20 carbon atoms, alkanoyl groups containing 2-20 carbon atoms, aroyl groups, monoalkylaminoalkyl groups containing 2-20 carbon atoms, dialkylaminoalkyl groups containing 3-20 carbon atoms, phenylazo groups whose functional groups are substituted or unsubstituted, anilinoalkyl groups whose functional groups are substituted or unsubstituted and $SO_3Na$ and at least one of the substituents $R_1$, $R_4$ and $R_6$ in said hydroxyquinoline derivative (K) represented by formula (2) is a bulky substituent selected from saturated or unsaturated hydrocarbon groups containing 6-20 carbon atoms and having a linear, branched or annular structure or a mixed structure thereof, alkyloxyalkyl groups containing 2-20 carbon atoms, alkanoyl groups containing 2-20 carbon atoms, dialkylaminoalkyl groups containing 3-20 carbon

atoms, phenylazo groups whose functional groups are substituted or unsubstituted and anilinoalkyl groups whose functional groups are substituted or unsubstituted.

9. A method for producing a luminescent organic polymer metal complex composition formable into film by a wet process as described in claim 8 wherein said compound of a divalent to tetravalent metal is a trialkylaluminum or trialkoxyaluminum.

10. A method for producing a polymer ligand (polyQ) having a repeating unit (Y) with an 8-hydroxyquinoline derivative (Q) introduced to its side chain, if necessary, through a spacer group (X) which is based on the sequence of the chloromethylation of an 8-hydroxyquinoline derivative (Q), the reaction of the chloromethylated 8-hydroxyquinoline derivative with a hydroxyalkyl (meth)acrylate to give an 8-hydroxyquinoline derivative containing a polymerizable substituent and the polymerization of the alkoxy (meth)acrylate group in said derivative and comprises reacting the hydroxyl group at the position 8 of said 8-hydroxyquinolien derivative containing a polymerizable substituent with a trialkylsilyl halide to introduce a trialkylsilyl group, then allowing the alkyloxy (meth)acrylate group to polymerize in the presence of an initiator and eliminating the trialkylsilyl group from the resulting polymer.

**Patentansprüche**

1. Lumineszierender organischer Polymer-Metall-Komplex, erhalten durch die Umsetzung eines Polymerliganden (polyQ), welcher eine Repetiereinheit (Y) aufweist, in deren Seitenkette ein 8-Hydroxychinolinderivat (Q), falls notwendig über eine Spacer-Gruppe (X), eingeführt ist, eines aus einem 8-Hydroxychinolinderivat (K) bestehenden Liganden (K) mit niedrigem Molekulargewicht und eines divalenten bis tetravalenten Metallions ($M^{n+}$) und dargestellt durch die folgende allgemeine Formel (1),

$$polyQ \cdot M \cdot K_{n-1} \qquad (1)$$

wobei besagtes 8-Hydroxychinolinderivat (K) durch die folgende allgemeine Formel (2) dargestellt ist

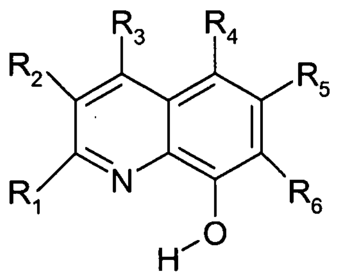

(2)

und in Formel (2) die Substituenten $R_1$-$R_6$ ausgewählt sind unter Wasserstoff, Halogenen, gesättigten oder ungesättigten Kohlenwasserstoffgruppen mit 1-20 Kohlenstoffatomen und einer linearen, verzweigten oder ringförmigen Struktur oder einer Mischstruktur davon, Alkoxygruppen mit 1-20 Kohlenstoffatomen, Alkylaminogruppen mit 1-20 Kohlenstoffatomen, Alkylthiogruppen mit 1-20 Kohlenstoffatomen, Alkylsulfonylgruppen mit 1-20 Kohlenstoffatomen, Alkyloxyalkylgruppen mit 2-20 Kohlenstoffatomen, Alkylthioalkylgruppen mit 2-20 Kohlenstoffatomen, Alkanoylgruppen mit 2-20 Kohlenstoffatomen, Aroylgruppen, Monoalkylaminoalkylgruppen mit 2-20 Kohlenstoffatomen, Dialkylaminoalkylgruppen mit 3-20 Kohlenstoffatomen, Phenylazogruppen, deren funktionelle Gruppen substituiert oder unsubstituiert sind, Anilinoalkylgruppen, deren funktionelle Gruppen substituiert oder unsubstituiert sind, und $-SO_3Na$ und mindestens einer der Substituenten $R_1$, $R_4$ und $R_6$ in besagtem 8-Hydroxychinolinderivat (K) der Formel (2) ein voluminöser Substituent ist, ausgewählt unter gesättigten oder ungesättigten Kohlenwasserstoffgruppen mit 6-20 Kohlenstoffatomen und einer linearen, verzweigten oder ringförmigen Struktur oder einer Mischstruktur davon, Alkyloxyalkylgruppen mit 2-20 Kohlenstoffatomen, Alkanoylgruppen mit 2-20 Kohlenstoffatomen, Dialkylaminoalkylgruppen mit 3-20 Kohlenstoffatomen, Phenylazogruppen, deren funktionelle Gruppen substituiert oder unsubstituiert sind, und Anilinoalkylgruppen, deren funktionelle Gruppen substituiert oder unsubstituiert sind.

2. Lumineszierender organischer Polymer-Metall-Komplex nach Anspruch 1, wobei besagte 8-Hydroxychinolingruppe

(K) 7-(4-Ethyl-1-methyloctyl)-8-hydroxychinolin oder 7-(1-Vinyl-3,3,6,6-tetramethylhexyl)-8-hydroxychinolin ist.

3. Lumineszierender organischer Polymer-Metall-Komplex nach einem der Ansprüche 1 bis 2, wobei besagtes divalentes bis tetravalentes Metallion ($M^{n+}$) $Al^{3+}$, $Ga^{3+}$ oder $Be^{2+}$ ist.

4. Lumineszierende organische Polymer-Metall-Komplex-Zusammensetzung, die sich durch ein Nassverfahren verfilmen lässt, umfassend einen Polymer-Metall-Komplex (HM-C) der Formel (1), wie in einem der Ansprüche 1 bis 3 beschrieben, und einen Metall-Komplex (LM-C) mit niedrigem Molekulargewicht der folgenden allgemeinen Formel (3),

$$M \cdot K_n \qquad (3)$$

in welchem nur ein Ligand (K) mit niedrigem Molekulargewicht, bestehend aus einem 8-Hydroxychinolinderivat (K), mit einem divalenten bis tetravalenten Metall-ion ($M^{n+}$) koordiniert ist, wobei das 8-Hydroxychinolinderivat (K) durch die folgende allgemeine Formel (2) dargestellt ist

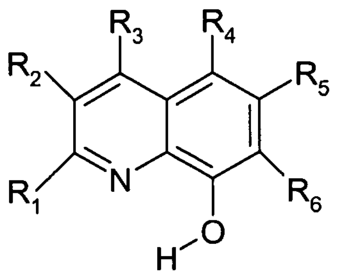

(2)

und in Formel (2) die Substituenten $R_1$-$R_6$ ausgewählt sind unter Wasserstoff, Halogenen, gesättigten oder ungesättigten Kohlenwasserstoffgruppen mit 1-20 Kohlenstoffatomen und einer linearen, verzweigten oder ringförmigen Struktur oder einer Mischstruktur davon, Alkoxygruppen mit 1-20 Kohlenstoffatomen, Alkylaminogruppen mit 1-20 Kohlenstoffatomen, Alkylthiogruppen mit 1-20 Kohlenstoffatomen, Alkylsulfonylgruppen mit 1-20 Kohlenstoffatomen, Alkyloxyalkylgruppen mit 2-20 Kohlenstoffatomen, Alkylthioalkylgruppen mit 2-20 Kohlenstoffatomen, Alkanoylgruppen mit 2-20 Kohlenstoffatomen, Aroylgruppen, Monoalkylaminoalkylgruppen mit 2-20 Kohlenstoffatomen, Dialkylaminoalkylgruppen mit 3-20 Kohlenstoffatomen, Phenylazogruppen, deren funktionelle Gruppen substituiert oder unsubstituiert sind, Anilinoalkylgruppen, deren funktionelle Gruppen substituiert oder unsubstituiert sind, und $-SO_3Na$ und mindestens einer der Substituenten $R_1$, $R_4$ und $R_6$ in besagtem 8-Hydroxychinolinderivat (K) der Formel (2) ein voluminöser Substituent ist, ausgewählt unter gesättigten oder ungesättigten Kohlenwasserstoffgruppen mit 6-20 Kohlenstoffatomen und einer linearen, verzweigten oder ringförmigen Struktur oder einer Mischstruktur davon, Alkyloxyalkylgruppen mit 2-20 Kohlenstoffatomen, Alkanoylgruppen mit 2-20 Kohlenstoffatomen, Dialkylaminoalkylgruppen mit 3-20 Kohlenstoffatomen, Phenylazogruppen, deren funktionelle Gruppen substituiert oder unsubstituiert sind, und Anilinoalkylgruppen, deren funktionelle Gruppen substituiert oder unsubstituiert sind.

5. Lumineszierende organische Polymer-Metall-Komplex-Zusammensetzung, die sich durch ein Nassverfahren verfilmen lässt, nach Anspruch 4, wobei besagte 8-Hydroxychinolingruppe (K) 7-(4-Ethyl-1-methyloctyl)-8-hydroxychinolin oder 7-(1-Vinyl-3,3,6,6-tetramethylhexyl)-8-hydroxychinolin ist.

6. Lumineszierende organische Polymer-Metall-Komplex-Zusammensetzung, die sich durch ein Nassverfahren verfilmen lässt, nach einem der Ansprüche 4 bis 5, wobei besagtes divalentes bis tetravalentes Metallion ($M^{n+}$) $Al^{3+}$, $Ga^{3+}$ oder $Be^{2+}$ ist.

7. Lumineszierende organische Polymer-Metall-Komplex-Zusammensetzung, die sich durch ein Nassverfahren verfilmen lässt, nach einem der Ansprüche 4 bis 6, wobei das molare Verhältnis von Polymer-Metall-Komplex (HM-C) der Formel (1) zu Metall-Komplex (LM-C) mit niedrigem Molekulargewicht oder das molare Verhältnis HM-C/LM-C 0,2 oder mehr ist.

8. Verfahren zur Herstellung einer lumineszierenden organischen Polymer-Metall-Komplex-Zusammensetzung, die sich durch ein Nassverfahren verfilmen lässt, umfassend die Umsetzung von 1 Äquivalent einer Verbindung eines divalenten bis tetravalenten Metalls, mit 0,1-1 Äquivalent eines Polymerliganden (polyQ) mit einer Repetiereinheit, in deren Seitenkette ein 8-Hydroxychinolinderivat (Q), falls notwendig über eine Spacer-Gruppe (X), eingeführt ist, und mit 1-3,9 Äquivalenten eines Liganden (K) mit niedrigem Molekulargewicht, der aus einem 8-Hydroxychinolinderivat (K) der folgenden allgemeinen Formel (2) besteht,

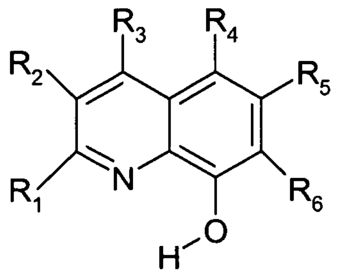

(2)

in einem Lösungsmittel zu einer lumineszierenden organischen Polymer-Metall-Komplex-Zusammensetzung, bestehend aus einem organischen Polymer-Metall-Komplex (HM-C) der folgenden allgemeinen Formel (1),

$$polyQ \cdot M \cdot K_{n-1} \qquad (1)$$

in welchem ein Polymerligand (polyQ) und ein Ligand (K) mit niedrigem Molekulargewicht mit einem divalenten bis tetravalenten Metallion ($M^{n+}$) koordiniert sind, und einem Metallkomplex (LM-C) mit niedrigem Molekulargewicht der folgenden allgemeinen Formel (3),

$$M \cdot K_n \qquad (3)$$

in welchem nur besagter Ligand (K) mit niedrigem Molekulargewicht mit einem divalenten bis tetravalenten Metallion ($M^{n+}$) koordiniert ist, wobei in Formel (2) die Substituenten $R_1$-$R_6$ ausgewählt sind unter Wasserstoff, Halogenen, gesättigten oder ungesättigten Kohlenwasserstoffgruppen mit 1-20 Kohlenstoffatomen und einer linearen, verzweigten oder ringförmigen Struktur oder einer Mischstruktur davon, Alkoxygruppen mit 1-20 Kohlenstoffatomen, Alkylaminogruppen mit 1-20 Kohlenstoffatomen, Alkylthiogruppen mit 1-20 Kohlenstoffatomen, Alkyloxyalkylgruppen mit 2-20 Kohlenstoffatomen, Alkylthioalkylgruppen mit 2-20 Kohlenstoffatomen, Alkanoylgruppen mit 2-20 Kohlenstoffatomen, Aroylgruppen, Monoalkylaminoalkylgruppen mit 2-20 Kohlenstoffatomen, Dialkylaminoalkylgruppen mit 3-20 Kohlenstoffatomen, Phenylazogruppen, deren funktionelle Gruppen substituiert oder unsubstituiert sind, Anilinoalkylgruppen, deren funktionelle Gruppen substituiert oder unsubstituiert sind, und $-SO_3Na$ und mindestens einer der Substituenten $R_1$, $R_4$ und $R_6$ in besagtem 8-Hydroxychinolinderivat (K) der Formel (2) ein voluminöser Substituent ist, ausgewählt unter gesättigten oder ungesättigten Kohlenwasserstoffgruppen mit 6-20 Kohlenstoffatomen und einer linearen, verzweigten oder ringförmigen Struktur oder einer Mischstruktur davon, Alkyloxyalkylgruppen mit 2-20 Kohlenstoffatomen, Alkanoylgruppen mit 2-20 Kohlenstoffatomen, Dialkylaminoalkylgruppen mit 3-20 Kohlenstoffatomen, Phenylazogruppen, deren funktionelle Gruppen substituiert oder unsubstituiert sind, und Anilinoalkylgruppen, deren funktionelle Gruppen substituiert oder unsubstituiert sind.

9. Verfahren zur Herstellung einer lumineszierenden organischen Polymer-Metall-Komplex-Zusammensetzung, die sich durch ein Nassverfahren verfilmen lässt, nach Anspruch 8, wobei besagte Verbindung eines divalenten bis tetravalenten Metalls ein Trialkylaluminium oder ein Trialkoxyaluminium ist.

10. Verfahren zur Herstellung eines Polymerliganden (polyQ), welcher eine Repetiereinheit (Y) aufweist, in deren Seitenkette ein 8-Hydroxychinolinderivat (Q), falls notwendig über eine Spacer-Gruppe (X), eingeführt ist, wobei dieses Verfahren basiert auf der Abfolge von Chlormethylierung eines 8-Hydroxychinolinerivats (Q), Umsetzung des chlormethylierten 8-Hyroxychinolinderivats mit einem Hydroxyalkyl(meth)acrylat zu einem 8-Hydroxychinolinderivat, das einen polymerisierbaren Substituenten enthält, und Polymerisation der Alkoxy(meth)acrylatgruppe in besagtem

Derivat, und wobei das Verfahren die Umsetzung der Hydroxylgruppe an Position 8 des besagten 8-Hydroxychinolinderivats, welches einen polymerisierbaren Substituenten enthält, mit einem Trialkylsilylhalogenid, um eine Trialkylsilylgruppe einzuführen, anschließendes Polymerisieren der Alkoxy(meth)acrylatgruppe in Gegenwart eines Initiators und das Entfernen der Trialkylsilylgruppe vom resultierenden Polymer umfasst.

**Revendications**

1. Complexe de métal polymère organique luminescent obtenu par la réaction d'un ligand polymère (polyQ) comportant un motif répété (Y) avec un dérivé de 8-hydroxyquinoléine (Q) introduit au niveau de sa chaîne latérale, si nécessaire, par l'intermédiaire d'un groupe espaceur (X), un ligand de faible masse moléculaire (K) constitué d'un dérivé de 8-hydroxyquinoléine (K) et d'un ion métal divalent à tétravalent ($M^{n+}$) et représenté par la formule générale (1) suivante

$$\text{polyQ} \bullet \text{M} \bullet \text{K}_{n\text{-}1} \quad (1)$$

dans laquelle ledit dérivé de 8-hydroxyquinoléine (K) est représenté par la formule générale (2) suivante ;

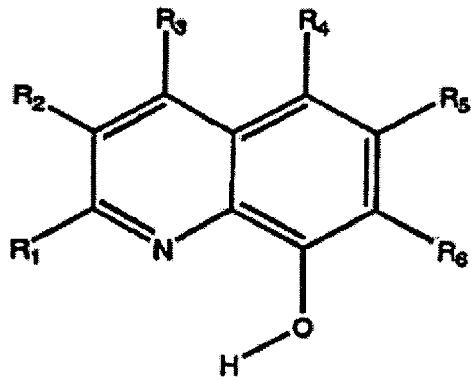

(2)

dans la formule (2), $R_1$ à $R_6$ sont des substituants choisis parmi des atomes d'hydrogène, d'halogènes, des groupes hydrocarbure saturés ou insaturés comprenant 1 à 20 atomes de carbone et ayant une structure linéaire, ramifiée ou annulaire ou une structure mixte de celles-ci, des groupes alcoxy contenant 1 à 20 atomes de carbone, des groupes alkylamino contenant 1 à 20 atomes de carbone, des groupes alkylthio contenant 1 à 20 atomes de carbone, des groupes alkylsulfonyle contenant 1 à 20 atomes de carbone, des groupes alkyloxyalkyle contenant 2 à 20 atomes de carbone, des groupes alkylthioalkyle contenant 2 à 20 atomes de carbone, des groupes alcanoyle contenant 2 à 20 atomes de carbone, des groupes aroyle, des groupes monoalkylaminoalkyle contenant 2 à 20 atomes de carbone, des groupes dialkylaminoalkyle contenant 3 à 20 atomes de carbone, des groupes phénylazo dont les groupes fonctionnels sont substitués ou non substitués, des groupes anilinoalkyle dont les groupes fonctionnels sont substitués ou non substitués et $-SO_3Na$ et au moins l'un des substituants $R_1$, $R_4$ et $R_6$ dans ledit dérivé de 8-hydroxyquinoléine (K) représenté par la formule (2) est un substituant volumineux choisi parmi des groupes hydrocarbure saturés ou insaturés contenant 6 à 20 atomes de carbone et ayant une structure linéaire, ramifiée ou annulaire ou une structure mixte de celles-ci, des groupes alkyloxyalkyle contenant 2 à 20 atomes de carbone, des groupes alcanoyles contenant 2 à 20 atomes de carbone, des groupes dialkylaminoalkyle contenant 3 à 20 atomes de carbone, des groupes phénylazo dont les groupes fonctionnels sont substitués ou non substitués et des groupes anilinoalkyle dont les groupes fonctionnels sont substitués ou non substitués.

2. Complexe de métal polymère organique luminescent comme décrit dans la revendication 1, dans lequel ledit groupe de 8-hydroxyquinoléine (K) est la 7-(4-éthyl-1-méthyloctyl)-8-hydroxyquinoléine ou la 7-(1-vinyl-3,3,6,6-tétraméthylhexyl)-8-hydroxyquinoléine.

3. Complexe de métal polymère organique luminescent comme décrit selon l'une quelconque des revendications 1 et 2, dans lequel ledit ion métal divalent à tétravalent ($M^{n+}$) est $Al^{3+}$, $Ga^{3+}$ ou $Be^{2+}$.

4. Composition de complexe de métal polymère organique luminescent pouvant être formée en film par un procédé par voie humide comprenant un complexe de métal polymère (HM-C) représenté par la formule (1) décrite dans l'une quelconque des revendications 1 à 3 et un complexe de métal de faible masse moléculaire (LM-C) représenté par la formule générale (3) suivante

$$M \bullet K_n \qquad (3)$$

dans laquelle seul un ligand de faible masse moléculaire (K) constitué d'un dérivé de 8-hydroxyquinoléine (K) est coordonné à un ion métal divalent à tétravalent ($M^{n+}$) où ledit dérivé de 8-hydroxyquinoléine (K) est représenté par la formule générale (2) suivante ;

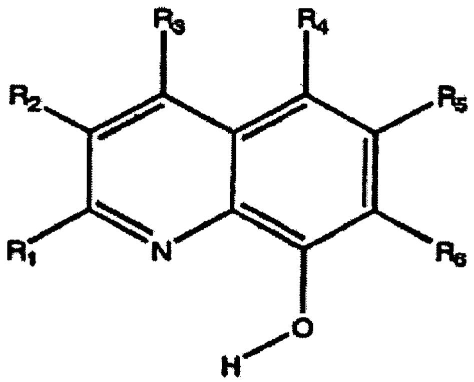

(2)

dans la formule (2), $R_1$ à $R_6$ sont des substituants choisis parmi des atomes d'hydrogène, d'halogènes, des groupes hydrocarbure saturés ou insaturés contenant 1 à 20 atomes de carbone et ayant une structure linéaire, ramifiée ou annulaire ou une structure mixte de celles-ci, des groupes alcoxy contenant 1 à 20 atomes de carbone, des groupes alkylamino contenant 1 à 20 atomes de carbone, des groupes alkylthio contenant 1 à 20 atomes de carbone, des groupes alkylsulfonyle contenant 1 à 20 atomes de carbone, des groupes alkyloxyalkyle contenant 2 à 20 atomes de carbone, des groupes alkylthioalkyle contenant 2 à 20 atomes de carbone, des groupes alcanoyle contenant 2 à 20 atomes de carbone, des groupes aroyle, des groupes monoalkylaminoalkyle contenant 2 à 20 atomes de carbone, des groupes dialkylaminoalkyle contenant 3 à 20 atomes de carbone, des groupes phénylazo dont les groupes fonctionnels sont substitués ou non substitués, des groupes anilinoalkyle dont les groupes fonctionnels sont substitués ou non substitués et $-SO_3Na$ et au moins l'un des substituants $R_1$, $R_4$ et $R_6$ dans ledit dérivé de 8-hydroxyquinoléine (K) représenté par la formule (2) est un substituant volumineux choisi parmi des groupes hydrocarbure saturés ou insaturés contenant 6 à 20 atomes de carbone et ayant une structure linéaire, ramifiée ou annulaire ou une structure mixte de celles-ci, des groupes alkyloxyalkyle contenant 2 à 20 atomes de carbone, des groupes alcanoyle contenant 2 à 20 atomes de carbone, des groupes dialkylaminoalkyle contenant 3 à 20 atomes de carbone, des groupes phénylazo dont les groupes fonctionnels sont substitués ou non substitués et des groupes anilinoalkyle dont les groupes fonctionnels sont substitués ou non substitués.

5. Composition de complexe de métal polymère organique luminescent pouvant être formée en film par un procédé par voie humide comme décrit dans la revendication 4, dans laquelle ledit dérivé de 8-hydroxyquinoléine (K) est la 7-(4-éthyl-1-méthyloctyl)-8-hydroxyquinoléine ou la 7-(1-vinyl-3,3,6,6-tétraméthylhexyl)-8-hydroxyquinoléine.

6. Composition de complexe de métal polymère organique luminescent pouvant être formée en film par un procédé par voie humide comme décrit selon l'une quelconque des revendications 4 et 5, dans laquelle ledit ion métal divalent à tétravalent ($M^{n+}$) est $Al^{3+}$, $Ga^{3+}$ ou $Be^{2+}$.

7. Composition de complexe de métal polymère organique luminescent pouvant être formée en film par un procédé par voie humide comme décrit dans l'une quelconque des revendications 4 à 6 dans laquelle le rapport molaire entre ledit complexe de métal polymère (HM-C) représenté par la formule (1) et ledit complexe de métal de faible masse moléculaire (LM-C) ou le rapport molaire HM-C/LM-C est de 0,2 ou plus.

**8.** Procédé de production d'une composition de complexe de métal polymère organique luminescent pouvant être formée en film par un procédé par voie humide qui comprend la réalisation de la réaction d' 1 équivalent d'un composé d'un métal divalent à tétravalent, de 0,1 à 1 équivalent d'un ligand polymère (polyQ) ayant un motif répété (Y) avec un dérivé de 8-hydroxyquinoléine (Q) introduit dans sa chaîne latérale, si nécessaire, par l'intermédiaire d'un groupe espaceur (X) et de 1 à 3,9 équivalents d'un ligand de faible masse moléculaire (K) constitué d'un dérivé de 8-hydroxyquinoléine (K) représenté par la formule générale (2) suivante

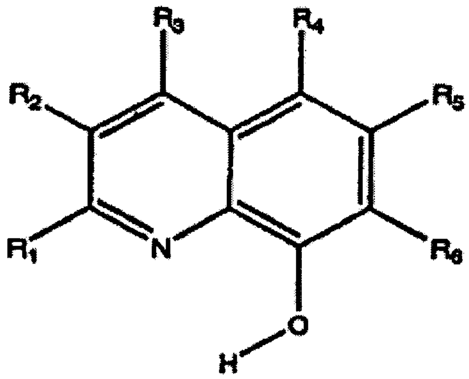

(2)

dans un solvant pour produire une composition de complexe de métal polymère organique constituée d'un complexe de métal polymère (HM-C) représenté par la formule générale (1) suivante

$$\text{polyQ} \bullet \text{M} \bullet \text{K}_{n-1} \quad (1)$$

dans laquelle un ligand polymère (polyQ) et un ligand de faible masse moléculaire (K) sont coordonnés à un ion métal divalent à tétravalent ($M^{n+}$) et un complexe de métal de faible masse moléculaire (LM-C) représenté par la formule générale (3) suivante

$$\text{M} \bullet \text{K}_n \quad (3)$$

dans laquelle ledit ligand de faible masse moléculaire (K) seul est coordonné à un ion métal divalent à tétravalent ($M^{n+}$) ; dans la formule (2), $R_1$ à $R_6$ sont des substituants choisis parmi de atomes d'hydrogène, d'halogènes, des groupes hydrocarbure saturés ou insaturés contenant 1 à 20 atomes de carbone et ayant une structure linéaire, ramifiée ou annulaire ou une structure mixte de celles-ci, des groupes alcoxy contenant 1 à 20 atomes de carbone, des groupes alkylamino contenant 1 à 20 atomes de carbone, des groupes alkylthio contenant 1 à 20 atomes de carbone, des groupes alkyloxyalkyle contenant 2 à 20 atomes de carbone, des groupes alkylthioalkyle contenant 2 à 20 atomes de carbone, des groupes alcanoyle contenant 2 à 20 atomes de carbone, des groupes aroyle, des groupes monoalkylaminoalkyle contenant 2 à 20 atomes de carbone, des groupes dialkylaminoalkyle contenant 3 à 20 atomes de carbone, des groupes phénylazo dont les groupes fonctionnels sont substitués ou non substitués, des groupes anilinoalkyle dont les groupes fonctionnels sont substitués ou non substitués et $-SO_3Na$ et au moins l'un des substituants $R_1$, $R_4$ et $R_6$ dans ledit dérivé de 8-hydroxyquinoléine (K) représenté par la formule (2) est un substituant volumineux choisi parmi des groupes hydrocarbure saturés ou insaturés contenant 6 à 20 atomes de carbone et ayant une structure linéaire, ramifiée ou annulaire ou une structure mixte de celles-ci, des groupes alkyloxyalkyle contenant 2 à 20 atomes de carbone, des groupes alcanoyle contenant 2 à 20 atomes de carbone, des groupes dialkylaminoalkyle contenant 3 à 20 atomes de carbone, des groupes phénylazo dont les groupes fonctionnels sont substitués ou non substitués et des groupes anilinoalkyle dont les groupes fonctionnels sont substitués ou non substitués.

**9.** Procédé de production d'une composition de complexe de métal polymère organique luminescent pouvant être formée en film par un procédé par voie humide comme décrit dans la revendication 8, dans lequel ledit composé d'un métal divalent à tétravalent est un trialkylaluminium ou trialcoxyaluminium.

**10.** Procédé de production d'un ligand polymère (polyQ) ayant un motif répété (Y) avec un dérivé de 8-hydroxyquinoléine (Q) introduit dans sa chaîne latérale, si nécessaire, par l'intermédiaire d'un groupe espaceur (X) qui est basé sur la séquence de la chlorométhylation d'un dérivé de 8-hydroxyquinoléine (Q), la réaction du dérivé de 8-hydroxyquinoléine chlorométhylé avec un (méth)acrylate d'hydroxyalkyle pour donner un dérivé de 8-hydroxyquinoléine contenant un substituant polymérisable et la polymérisation du groupe alkoxy (méth)acrylate dans ledit dérivé et comprend la réaction du groupe hydroxyle en position 8 dudit dérivé de 8-hydroxyquinoléine contenant un substituant polymérisable avec un halogénure de trialkylsilyle pour introduire un groupe trialkylsilyle, permettant ensuite au groupe alkyloxy (méth)acrylate de polymériser en présence d'un initiateur et éliminant le groupe trialkylsilyle du polymère résultant.

# Fig. 1

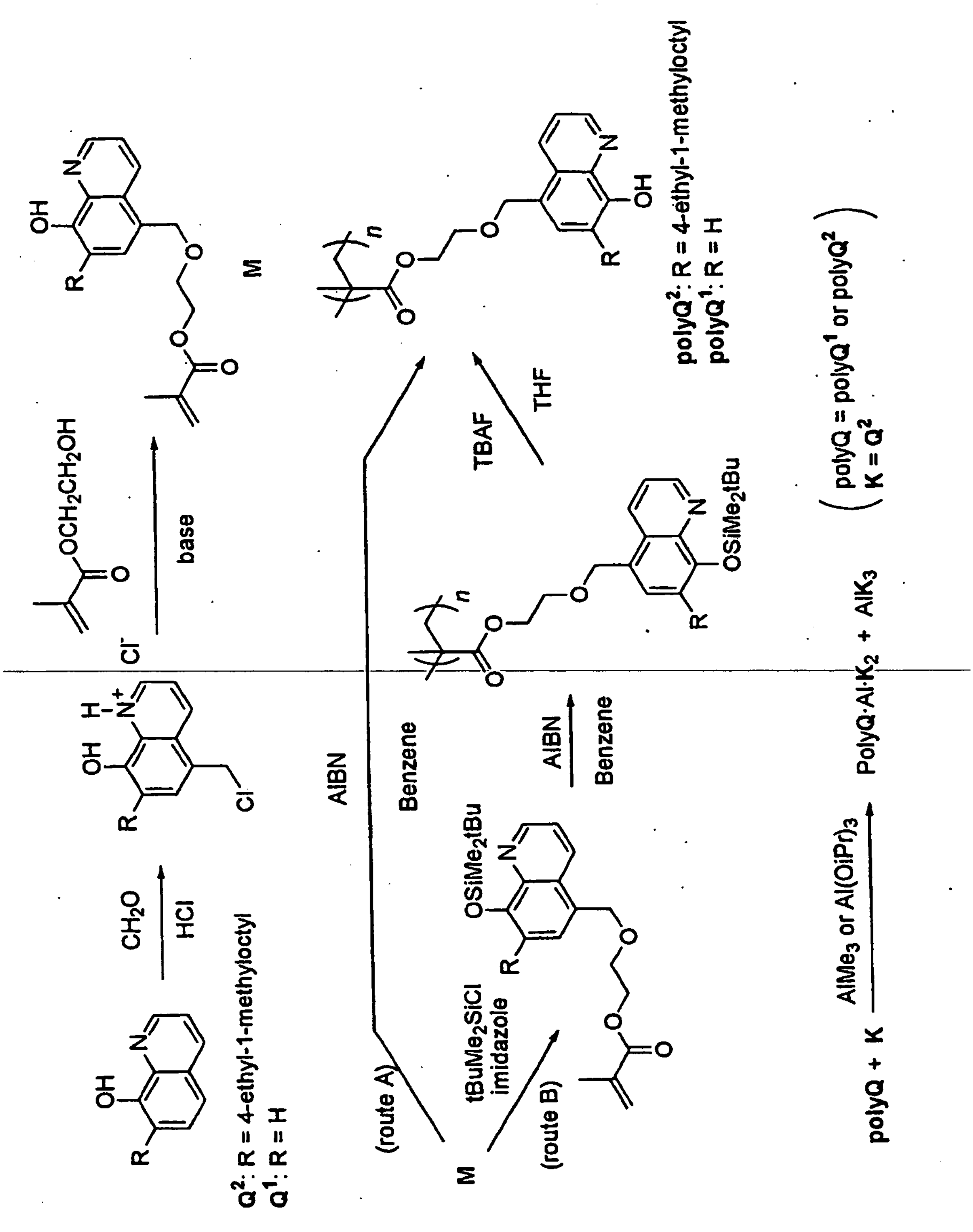


$Q^2$: R = 4-ethyl-1-methyloctyl
$Q^1$: R = H

M

poly$Q^2$: R = 4-ethyl-1-methyloctyl
poly$Q^1$: R = H

polyQ + K → PolyQ·Al·$K_2$ + $AlK_3$

(polyQ = poly$Q^1$ or poly$Q^2$, K = $Q^2$)

Fig. 2

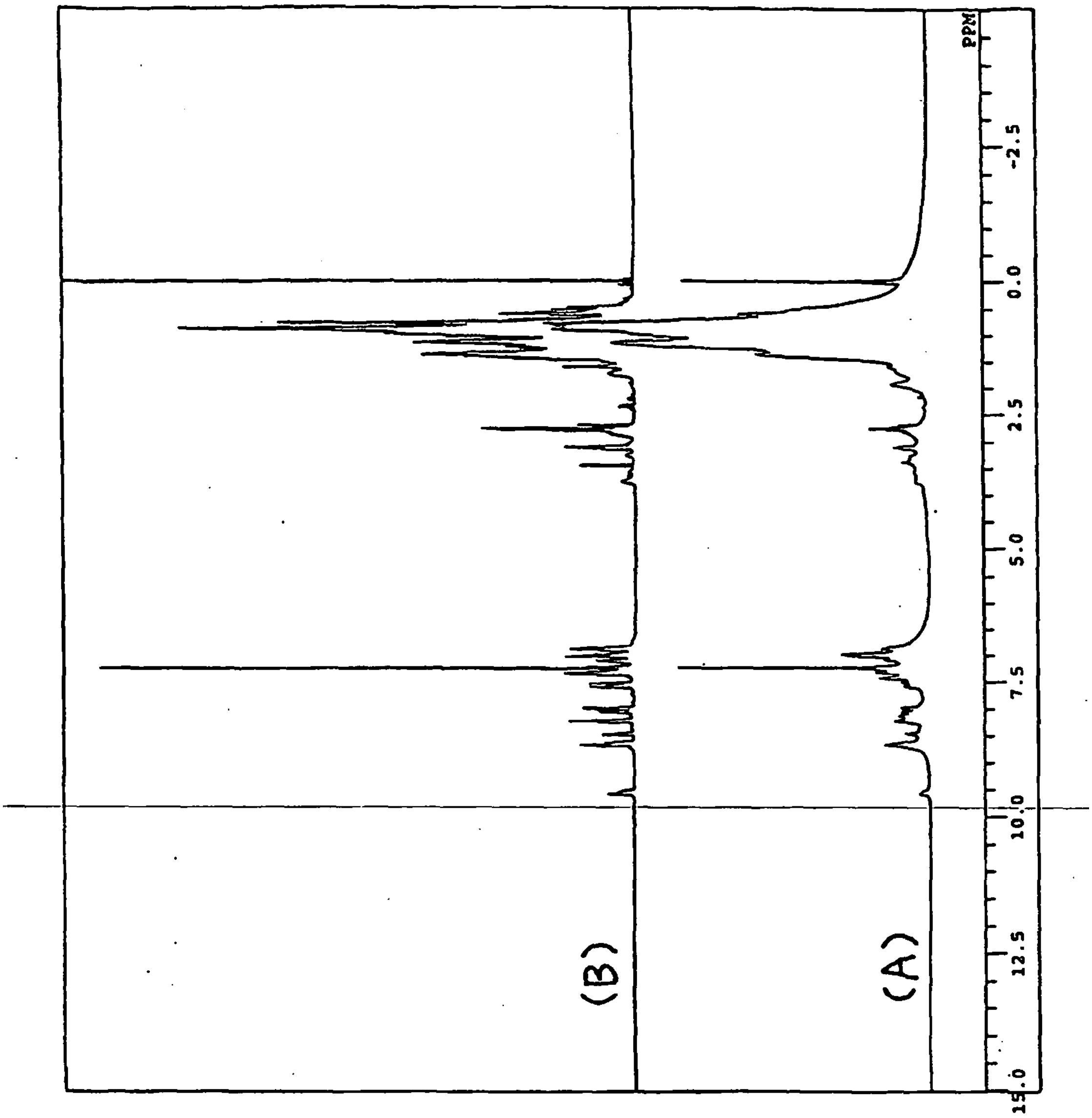

F i g. 3

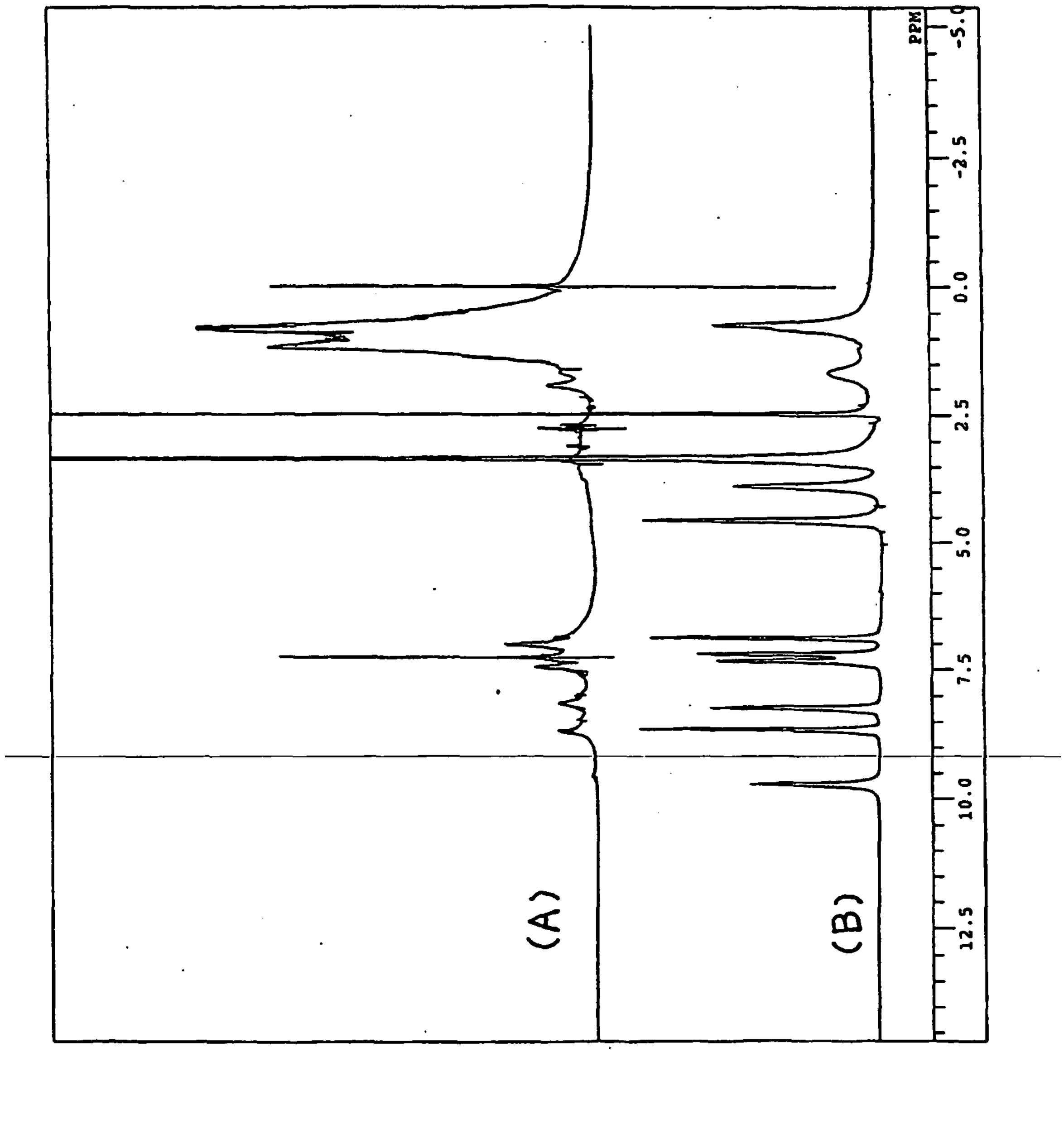

Fig. 4

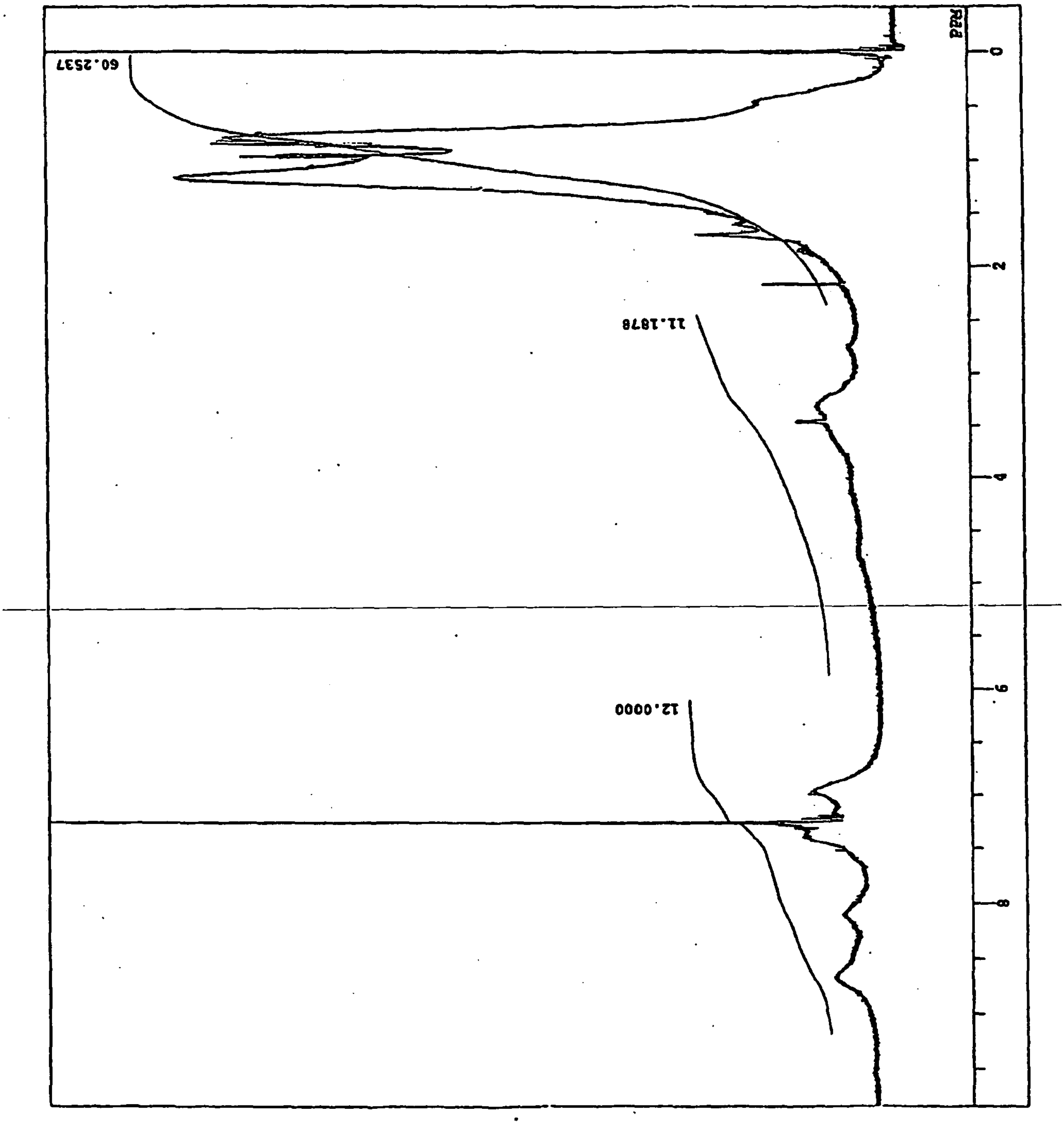

F i g. 5

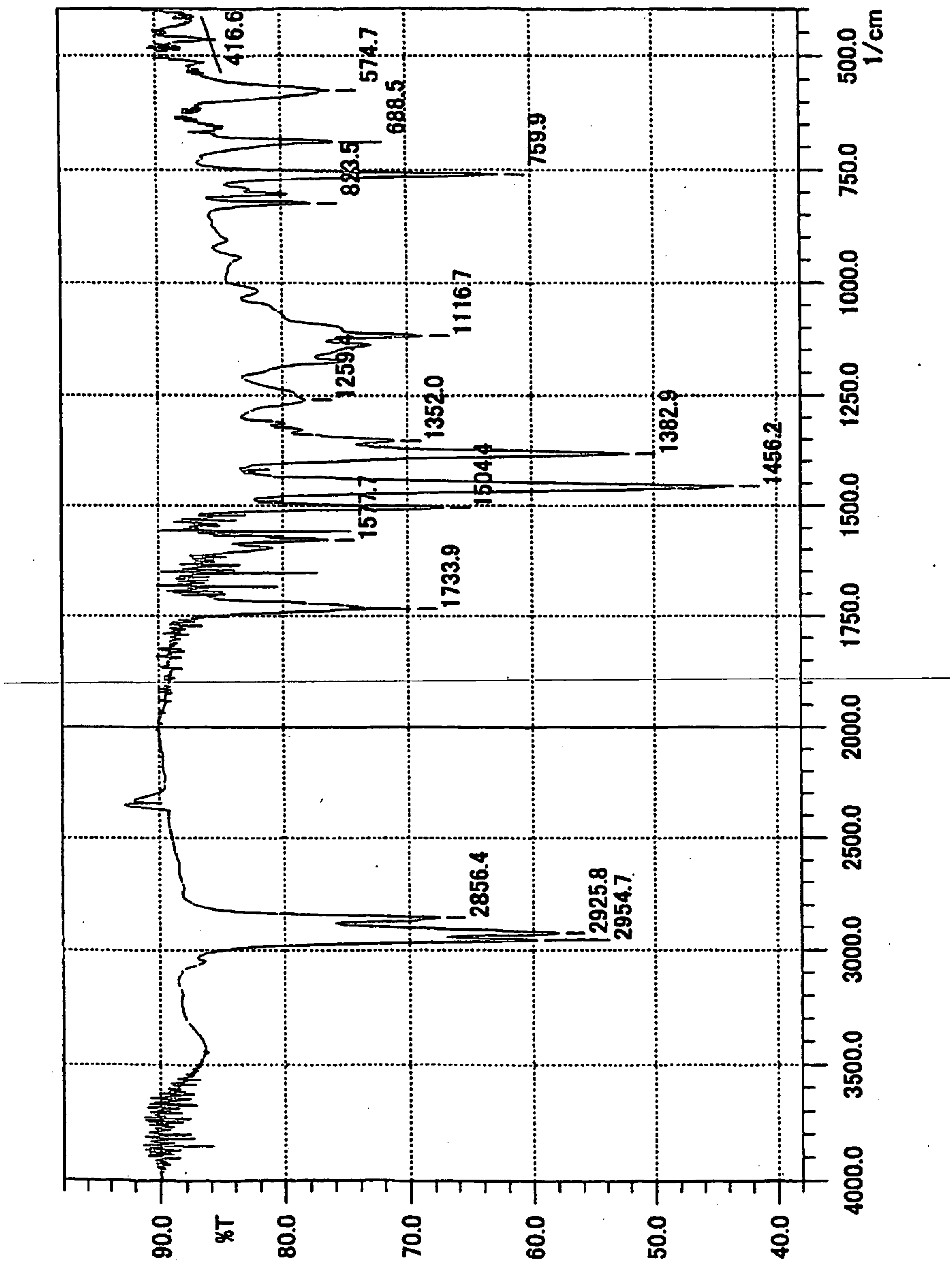

416.6
574.7
688.5
759.9
823.5
1116.7
1259.4
1352.0
1382.9
1456.2
1504.4
1577.7
1733.9
2856.4
2925.8
2954.7
500.0
750.0
1000.0
1250.0
1500.0
1750.0
2000.0
2500.0
3000.0
3500.0
4000.0
1/cm
90.0
%T
80.0
70.0
60.0
50.0
40.0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02068560 A
- JP 2001131542 A
- JP 2001185357 A
- JP 2001220579 A

### Non-patent literature cited in the description


- *Journal of Polymer Science, Part A: Polymer Chemistry,* 2000, vol. 38, 2887
- *Macromolecules,* 2003, vol. 36, 1766
- *J. Org. Chem.,* 1961, vol. 26, 4078